# FASCICULE DE BREVET EUROPEEN

(11) **EP 0 575 209 B1**
(45) Date de publication et mention de la délivrance du brevet: **27.03.1996**
(21) Numéro de dépôt: 93401349.1
(22) Date de dépôt: 26.05.1993
(51) Int. Cl.: G01D 5/16, B62D 15/02, H01C 1/022

(54) **Dispositif potentiométrique de captage de rotation et son application à une colonne de direction d'automobile**
Potentiometrischer Winkelgeber und dessen Verwendung bei der Lenksäule eines Fahrzeuges
Potentiometrie rotation sensor and its application in a vehicular steering column

(30) Priorité: 16.06.1992 FR 9207286
(43) Date de publication de la demande: 22.12.1993
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR)
(74) Mandataire: Polus, Camille

(56) Documents cités:
- EP-A- 0 325 787
- FR-A- 2 167 752
- PATENT ABSTRACTS OF JAPAN vol. 7, no. 157 (M-227)(1302) 9 Juillet 1983 & JP-A-58 063 547 ( NISSAN JIDOSHA KK ) 15 avril 1983
- ELEKTRONIK vol. 38, no. 5, 3 Mars 1989, MÜNCHEN, DEUTSCHLAND pages 91 - 96 , XP000105958 DIPL.-ING. ERNST GASS 'Gütemerkmale von Leitplastik-Potentiometern'

## Description

La présente invention concerne l'évaluation d'une rotation tant en sens qu'en amplitude et en vitesse, et concerne un dispositif potentiométrique de captage de la rotation d'un arbre relativement au support qui le porte.

L'invention a tout spécialement pour objets un dispositif potentiométrique de captage de la rotation d'un arbre relativement à son support et son application notamment à une colonne de direction d'automobile.

Dans de nombreux secteurs industriels, il est nécessaire de connaître le sens, l'amplitude et la vitesse d'une rotation par exemple d'un arbre relativement à son support. Une telle situation se rencontre par exemple à bord des véhicules automobiles terrestres pour asservir le braquage des roues directrices et/ou le comportement de la suspension aux instructions du conducteur qui résultent de la rotation qu'il imprime au volant.

Pour évaluer ainsi une rotation en sens amplitude et vitesse, on a déjà proposé d'utiliser des systèmes potentiométriques. Les potentiomètres utilisés comprennent, habituellement, un corps de résistance sur lequel se déplace un curseur, en contact électrique avec le corps de résistance, en fonction du paramètre à suivre. Dans un tel cas, le corps de résistance est le plus souvent maintenu fixe et rendu solidaire d'un support alors que le curseur suit une came associée à l'élément à suivre porté par le support.

Un état de la technique est illustré par Le document JP-A-58-63 547.

Le but de l'invention est de perfectionner ce type de solution.

L'invention a pour objet un dispositif potentiométrique de captage de la rotation d'un arbre relativement au support qui le porte du type qui est décrit dans ce document et dont les particularités distinctives sont énoncées notamment dans la revendication 1.

L'invention a aussi pour objet l'application d'un tel dispositif potentiométrique de captage à une colonne de direction d'automobile constituée notamment d'un support et d'un arbre tournant relativement l'un à l'autre.

D'autres caractéristiques de l'invention apparaîtront à la lecture de la description et des revendications qui suivent, ainsi qu'à l'examen du dessin annexé, donné seulement à titre d'exemple, où :

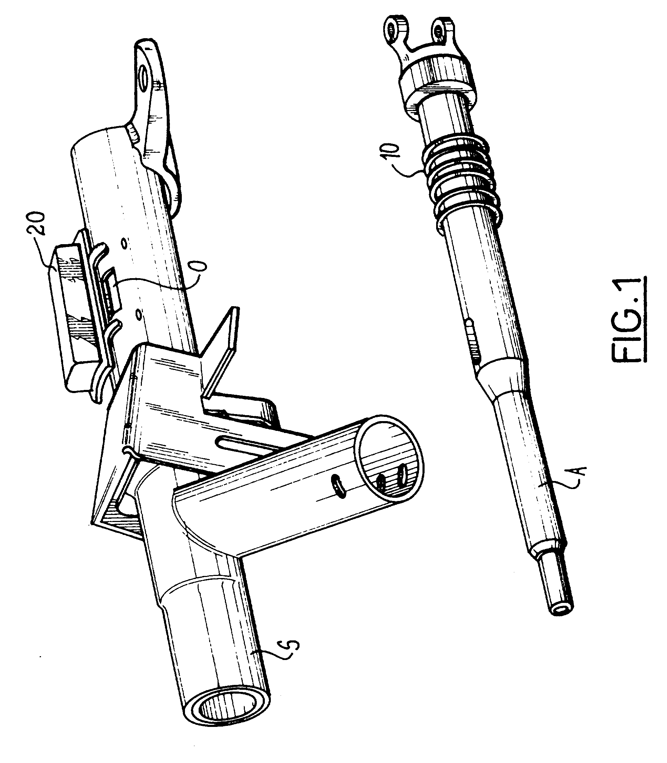

- la Figure 1 est une vue perspective schématique partielle éclatée de l'application d'un dispositif potentiométrique de captage de rotation selon l'invention à une direction d'automobile;
- la Figure 2 est une vue perspective partielle d'un constituant d'un dispositif selon l'invention;
- la Figure 3 est une vue perspective partielle éclatée de constituants d'un dispositif selon l'invention; et
- les Figures 4 et 5 sont des coupes transversales schématiques par un plan perpendiculaire à l'arbre et passant par le connecteur, d'un dispositif selon l'invention dans son application de la Figure 1, illustré dans deux phases de sa mise en oeuvre.

Les dispositifs potentiométriques de captage de la rotation d'un arbre relativement au support qui le porte ainsi que les colonnes de direction d'automobiles étant bien connus dans la technique, on ne décrira dans ce qui suit que ce qui concerne directement ou indirectement l'invention. Pour le surplus, l'homme du métier de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un dispositif potentiométrique de captage de la rotation d'un arbre relativement au support qui le porte selon l'invention, avant d'en exposer la fabrication au besoin, le montage et le fonctionnement.

Dans ce qui suit, on décrira le dispositif potentiométrique de captage de la rotation d'un arbre relativement au support qui le porte selon l'invention dans son application particulière à une direction d'automobile. Il est clair que les applications du dispositif selon l'invention ne sont pas limitées à une telle application.

Comme on le voit, un support S, par exemple en forme de fourreau tubulaire, est transpercée localement d'une ouverture O. Ce support S est celui qui apparaît par exemple dans le poste de conduite d'une automobile et qui se présente dans l'habitacle avec par exemple son appendice périphérique pour un anti-vol. Le support S est destiné à recevoir un arbre A dont un tronçon est illustré. L'une des extrémités de ce tronçon est habituellement munie d'un volant non dessiné et l'autre des extrémités est souvent munie d'une mâchoire de joint de cardan comme illustré schématiquement.

Les rotations imprimées à l'arbre A par le volant sont détectées en sens, amplitude et vitesse par un potentiomètre P fait comme il est classique notamment d'un corps de résistance R et d'un curseur C se déplaçant à son contact. Ce potentiomètre est de tout type connu approprié.

Un dispositif potentiométrique de captage de la rotation de l'arbre A relativement au support S, selon l'invention, comprend essentiellement une came 10 hélicoïdale, un boîtier 20 et une contre-came-coulisseau 30.

La came hélicoïdale 10 est faite d'une gorge usinée ou autrement ménagée à la surface de l'arbre A. Dans le mode de réalisation illustré, cette came 10 est faite d'un ressort à boudin à spires non jointives, qui est fixé sur l'arbre de toute manière appropriée par exemple par soudage ou collage. Pour le mode de réalisation décrit et illustré, le ressort-came 10 est par exemple enfilé à force sur l'arbre, en le faisant tourner sur lui-même en le "vissant" en quelque sorte dans le sens de l'enroulement; ceci a pour effet d'augmenter suffisamment son diamètre intérieur pour faciliter sa mise en place. Ensuite, mise en place correcte faite, le ressort-came 10 se maintient en position par l'action conjugée de son élasticité inhérente propre et des forces de frottement induites.

Le boîtier 20 comprend des moyens de fixation 21, un logement 22, un passage 23, des moyens de guidage en translation 24, un connecteur électrique 25.

Les moyens de fixation 21 comprennent par exemple une collerette 211 avec des pattes 212 destinées à monter le boîtier sur le support S en regard de l'ouverture O. La fixation du boîtier sur le support est obtenue à l'aide de toute technique appropriée par exemple par vissage, rivetage, soudage, collage, encliquetage, etc. Une telle fixation peut se faire en "aveugle".

Le logement 22 est destiné à recevoir le corps de résistance R du potentiomètre P. Le passage 23 est destiné à recevoir le curseur mobile C du potentiomètre P.

Les moyens de guidage 24 en translation sont par exemple du type à rainures 241 et languettes 242 sur lesquelles on reviendra par la suite.

Le connecteur électrique 25 comprend par exemple un socle 251 ou similaire dans lequel sont logés des contacts électriques 252, comme il est classique.

De préférence, le boîtier 20 est fait en deux demi-coquilles 200 réunies par des moyens de liaison 201 de tout type approprié, par exemple assurant la réunion des deux demi-coquilles par vissage, rivetage, collage, soudage, encliquetage.

Ces moyens de liaison 201 sont convenablement appropriés aux matériaux utilisés pour la confection du boîtier. Avantageusement ce boîtier est fait en une résine synthétique convenable moulée.

Comme on le voit, c'est l'une de ces demi-coquilles qui porte à l'extérieur le socle 251 du connecteur 25.

La contre-came-coulisseau 30 comprend, essentiellement, une embase 31, un levier 32, un axe 33, un verrou 34 et une sollicitation élastique 35.

L'embase 31 est destinée à coopérer avec les moyens de guidage 24 et à recevoir le curseur C du potentiomètre. L'embase 31 comprend un talon 311 avec une gorge 3111 destinée à recevoir le curseur C et dont deux côtés opposés servent de languettes 242. Ces languettes 242 sont engagées dans les rainures 241 ménagées dans le boîtier 20 de manière à y coulisser librement pratiquement sans frottement. On voit donc que l'embase 31 entraîne le curseur C dans ses déplacements. La solution inverse peut être utilisée : les rainures dans le talon ou l'embase et les languettes sur le boîtier. L'embase 31 comprend aussi un palier 312 de préférence en forme d'empreinte 3121 demi-cylindrique, qui est bordé de part et d'autre de joues 3122 latérales et qui est équipé d'une patte 3123 avec une encoche 3124 sur laquelle on reviendra par la suite.

Le levier 32 comprend deux bras 321, 322 séparés par un palier 323 de préférence en forme d'enpreinte 3231 demi-cylindrique.

L'un des bras, le bras 321, est muni d'une dent 3211 destinée à suivre la came hélicoïdale 10, par exemple en s'insérant entre deux spires.

Les paliers 312 et 323 définissent un axe 33 de basculement pour le levier 32.

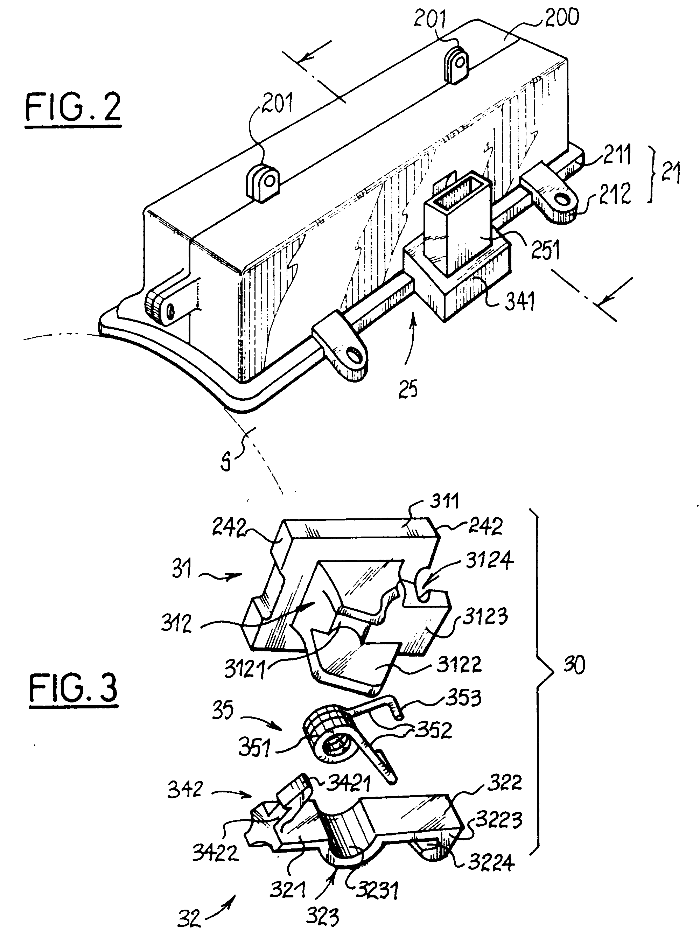

Le verrou 34 qui associe le levier 32 et le connecteur 25 comprend un mentonnet 341 et un loquet 342. Le mentonnet 341 est, par exemple, un rebord extérieur du socle 251 du connecteur 25. Le loquet 342 est formé d'un crochet 3421 avec un biseau extérieur destiné à coopérer avec le mentonnet 341 et d'une lame 3422 flexible reliée au levier 321. Cela apparaît clairement en particulier sur la Figure 3.

La sollicitation élastique 35 tend normalement à ouvrir le verrou 34, c'est-à-dire tend à séparer le loquet 342 du mentonnet 341. Cette sollicitation élastique 35 est assurée par exemple par un ressort à boudin avec des spires 351 destinées à reposer dans les paliers 312, 323 et avec des branches 352 qui se prolongent, chacune, par un brin 353 coudé destiné à reposer dans une encoche 3124, 3224.

L'embase 31 et le levier 32 sont par exemple faits en matière synthétique moulée et le ressort à boudin est par exemple fait en corde à piano.

L'ensemble des constituants du dispositif selon l'invention sont réunis, montés et assemblés comme cela ressort clairement de l'examen des figures du dessin. En particulier, on voit que le montage du levier 32 et du ressort à boudin sur l'embase 31 est d'un type similaire à celui d'une pince à linge.

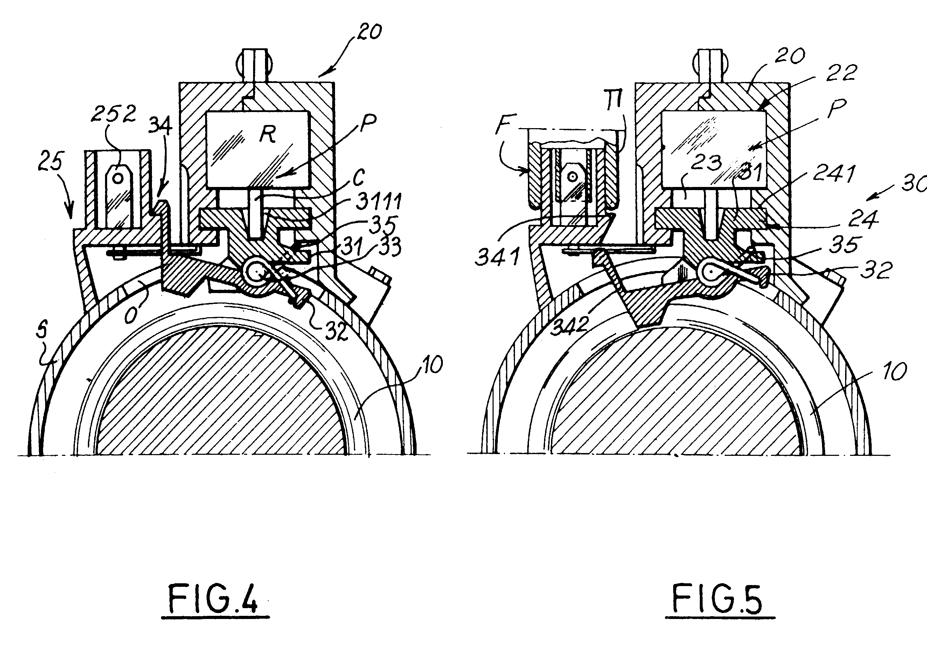

A l'état initial, le dispositif selon l'invention, est placé dans une position où le curseur C du potentiomètre occupe une situation médiane par rapport à sa course totale. On fixe alors le boîtier 20 sur le support S de manière que la contre-came-coulisseau 30 soit à l'aplomb de l'ouverture 0. Le dispositif occupe alors la position dans laquelle il est dessiné sur la Figure 4. On voit que le loquet 342 du verrou 34 est accroché sur son mentonnet 341. On agit alors sur le volant de manière à donner aux roues directrices du véhicule une orientation qui correspond à celle de la ligne droite.

On introduit alors une fiche F amovible du connecteur 25 sur le socle 251 pour assurer la continuité électrique des circuits non représentés à l'aide des contacts 252 et de contacts complémentaires de la fiche qui s'y accouplent. Comme on le voit, la paroi π de la fiche F à proximité de sa fin de course d'introduction rencontre le biseau du crochet 3421 du loquet 342 et déloge le crochet du mentonnet. Le levier 32 est libéré et bascule sous l'action de la sollicitation élastique 35 de manière que la dent 3211 soit chassée en direction de la came 10.

Deux situations peuvent se rencontrer. Où la dent 3211 est effectivement en regard ou pratiquement tel de l'intervalle entre deux spires 351 successives et le coulisseau-contre-came 30 est réellement mis en prise avec la came 10. Où bien la dent rencontre et bute contre une spire 351 et alors à la première rotation de l'arbre entraînant la came 10, dans un sens ou dans l'autre, la spire gênante se déplace et la dent 3211 vient se loger spontanément et automatiquement entre deux spires successives, comme précédemment indiqué.

On voit donc tous les avantages apportés par le dispositif selon l'invention puisque sa mise en oeuvre est automatique au moment du raccordement électrique sans qu'il y ait lieu de se livrer à des tatonnements fastidieux et délicats.

Il est clair que ce dispositif trouve des applications dans d'autres domaines que celui des véhicules automobiles terrestres.

## Revendications

1. Dispositif potentiométrique de captage de la rotation d'un arbre relativement au support qui le porte, qui est équipé d'une came (10) héLicoïdaLe associée à L'arbre pour en être soLidaire en rotation et qui est caractérisé en ce qu'iL comprend un boîtier (20) avec des moyens de fixation (21) pour L'assujettir au support, avec un logement (22) destiné à recevoir le corps de résistance d'un potentiomètre, avec un passage (23) destiné à recevoir le curseur mobile du potentiomètre, avec des moyens de guidage (24) en translation et avec un connecteur électrique (25), un coulisseau-contre-came (30) avec une embase (31) destinée à coopérer avec les moyens de guidage (24) et à recevoir le curseur du potentiomètre qu'il entraîne, avec un levier (32) monté basculant sur l'embase (31) et coopérant avec la came (10), avec un axe (33) définissant le basculement du levier (32) sur l'embase (31), avec un verrou (34) associant le levier (32) et le connecteur (25) et avec une sollicitation élastique (35) tendant normalement à ouvrir le verrou (34).

2. Dispositif selon la revendication 1, caractérisé en ce que les moyens de guidage (24) comprennent au moins une rainure (241) et au moins une languette (242) engagées l'une avec l'autre qui sont portées l'une par le boîtier (20) et l'autre par l'embase (31).

3. Dispositif selon la revendication 1 ou 2, caractérisé en ce que le verrou (34) comprend un mentonnet (341) associé au connecteur (25) et un loquet (342) associé au levier (32).

4. Dispositif selon la revendication 3, caractérisé en ce que le mentonnet (341) est formé d'un rebord du connecteur (25) et en ce que le loquet (342) est formé d'un crochet (3421) destiné à coopérer avec le mentonnet (341) et d'une lame (3422) flexible reliée au levier (32).

5. Dispositif selon l'une quelconque des revendications 2 à 4, caractérisé en ce que l'embase (31) comprend un talon (311) qui porte ces languettes (242) et qui est destiné à recevoir le curseur, et un palier (312) pour recevoir l'axe (33), et en ce que le levier (32) comprend deux bras (321, 322) et un palier (323) séparant ces bras (321, 322) et destiné à recevoir l'axe (33).

6. Dispositif selon la revendication 5, caractérisé en ce que chacun des paliers (312, 323) est fait d'une empreinte en forme de demi-cylindre (3121, 3231).

7. Dispositif selon la revendication 6, caractérisé en ce que le palier (312) de l'embase est muni d'une patte (3123) et d'une encoche (3124) et en ce que le palier (323) du levier (32) est muni d'une patte (3223) et d'une encoche (3224) portées par un bras (322) de celui-ci (32).

8. Dispositif selon l'une quelconque des revendications 5 à 7, caractérisé en ce que la sollicitation élastique (35) est exercée par un ressort à boudin avec des spires (351) destinées à reposer dans les paliers (312, 323) et avec des branches (352) qui se prolongent chacune par un brin (353) coudé destiné à reposer dans une encoche (3124, 3224).

9. Dispositif selon l'une quelconque des revendications 5 à 8, caractérisé en ce que l'un (321) des bras (321, 322) est muni d'une dent (3211) destinée à suivre la came (10).

10. Dispositif selon l'une quelconque des revendications 1 à 9, caractérisé en ce que la came (10) est un ressort à boudin fixé à l'arbre.

11. Dispositif selon l'une quelconque des revendications 3 à 10, caractérisé en ce que le connecteur (25) comprend un socle (251) solidaire du boîtier (10) et en ce que le mentonnet (341) est un rebord extérieur du socle (251).

12. Dispositif selon l'une quelconque des revendications 1 à 11, caractérisé en ce que le boîtier (20) est constitué de deux demi-coquilles (200) réunies par des moyens de liaison (201), et en ce que l'une de ces demi-coquilles (200) porte le connecteur (25).

13. Application d'un dispositif selon l'une quelconque des revendications 1 à 12, caractérisée en ce que l'arbre et son support font partie d'une colonne de direction d'automobile.

## Claims

1. A potentiometric device for detecting the rotation of a shaft relative to the support carrying it, which is provided with a helical cam (10) associated with the shaft to be joined thereto in rotation, and which is characterized in that it comprises: a box (20) with fixing means (21) to fasten it to the support, with a housing (22) intended to receive the resistor body of a potentiometer, with a duct (23) intended to receive the movable slider of the potentiometer, with translational guide means (24) and with an electric connector (25); and a cam follower (30) with a seat (31) intended to cooperate with the guide means (24) and to receive the slider of the potentiometer which it is driving, with a lever (32) mounted for rocking on the seat (31) and cooperating with the cam (10), with a pin (33) defining the rocking of the lever (32) on the seat (31), with a latch (34) connecting the lever (32) and the connector (25) and with an elastic straining means (35) normally tending to open the latch (34).

2. A device according to claim 1, characterized in that the guide means (24) comprise at least one groove (241) and at least one tongue (242) engaged with each other which are carried. one by the box (20), and the other by the seat (31).

3. A device according to claim 1 or 2, characterized in that the latch (34) includes a dog (341) associated with a connector (25) and a catch bolt (342) associated with the lever (32).

4. A device according to claim 3, characterized in that the dog (341) is formed by a flange of the connector (25); and in that the catch bolt (342) is formed by a hook (3421) intended to cooperate with the dog (341) and a flexible strip (3422) connected to the lever (32).

5. A device according to any one of claims 2 to 4, characterized in that the seat (31) has a flange (311) which carries these tongues (242) and which is intended to receive the slider, and a bearing (312) for receiving the pin (33); and in that the lever (32) has two arms (321, 322) and a bearing (323) separating these arms (321, 322) and intended to receive the pin (33).

6. A device according to claim 5, characterized in that each of the bearings (312, 323) is made by a recess (3121, 3231) in a half-cylindrical shape.

7. A device according to claim 6, characterized in that the bearing (312) of the seat is provided with a tab (3123) and with a notch (3124); and in that the bearing (323) of the lever (32) is provided with a tab (3223) and a notch (3224) carried by an arm (322) of the latter (32).

8. A device according to any one of claims 5 to 7, characterized in that the elastic straining (35) is exerted by a coil spring with turns (351) intended to rest in the bearings (312, 323) and with arms (352) which are each extended in a bent end (353) intended to rest in a notch (3124, 3224).

9. A device according to any one of claims 5 to 8, characterized in that one (321) of the arms (321, 322) is provided with a tooth (3211) intended to follow the cam (10).

10. A device according to any one of claims 1 to 9, characterized in that the cam (10) is a coil spring fixed to the shaft.

11. A device according to any one of claims 3 to 10, characterized in that the connector (25) comprises a mounting base (25) joined to the box (10); and in that the dog (341) is an external flange of the mounting base (251).

12. A device according to any one of claims 1 to 11, characterized in that the box (20) is constituted by two half shells (200) joined by connecting means (201); and in that one of these half shells (200) carries the connector (25).

13. Application of a device according to any one of claims 1 to 12, characterized in that the shaft and its support form part of a steering column of a motor vehicle.

## Patentansprüche

1. Potentiometervorrichtung zur Erfassung der Drehung einer Welle relativ zu einem sie tragenden Träger, die mit einem zur Welle gehörenden und mit dieser drehfest verbundenen, schraubenlinienförmigen Nocken (10) versehen und dadurch gekennzeichnet ist, daß sie ein Gehäuse (20), das seinerseits versehen ist mit Befestigungsmitteln (21), um sie am Träger zu befestigen, einem Aufnahmeraum (22), der dazu vorgesehen ist, den Widerstandskörper eines Potentiometers aufzunehmen, einem Durchlaß (23), der dazu vorgesehen ist, den beweglichen Läufer des Potentiometers aufzunehmen, Mitteln (24) zum Führen in Translationsrichtung und einem elektrischen Verbinder (25), sowie einen Nockenstößel (30) enthält, der seinerseits versehen ist mit einer Sitzfläche (31), die dazu vorgesehen ist, mit den Führungsmitteln (24) zusammenzuwirken und den Läufer des Potentiometers, den er antreibt, aufzunehmen, einem Hebel (32), der kippbar an der Sitzfläche (31) angebracht ist und mit dem Nocken (10) zusammenwirkt, einer Achse (33), die die Kippung des Hebels (32) an der Sitzfläche (31) definiert, einem Riegel (34), der den Hebel (32) mit dem Verbinder (25) verbindet, und einer elastischen Vorbelastungseinrichtung (35), die normalerweise bestrebt ist, den Riegel (34) zu öffnen.

2. Vorrichtung nach Anspruch 1, dadurch gekennzeichnet, daß die Führungsmittel (24) wenigstens eine Nut (241) und wenigstens eine Zunge (242) enthalten, die miteinander in Eingriff sind, wovon die eine vom Gehäuse (20) und die andere von der Sitzfläche (31) getragen wird.

3. Vorrichtung nach Anspruch 1 oder 2, dadurch gekennzeichnet, daß der Riegel (34) eine Nase (341), die zum Verbinder (25) gehört, sowie eine Fallklinke (342), die zum Hebel (32) gehört, enthält.

4. Vorrichtung nach Anspruch 3, dadurch gekennzeichnet, daß die Nase (341) aus einer Kante des Verbinders (25) gebildet ist und daß die Fallklinke (342) aus einem Haken (3421), der dazu vorgesehen ist, mit der Nase (341) zusammenzuwirken, sowie aus einem Plättchen (3422) gebildet ist, das mit dem Hebel (32) flexibel verbunden ist.

5. Vorrichtung nach irgendeinem der Ansprüche 2 bis 4, dadurch gekennzeichnet, daß die Sitzfläche (31) einen Ansatz (311), der diese Zungen (242) trägt und der dazu vorgesehen ist, den Läufer aufzunehmen, sowie ein Lager (312) für die Aufnahme der Achse (33) enthält, und daß der Hebel (32) zwei Arme (321, 322) und ein Lager (323), das diese Arme (321, 322) trennt und dazu vorgesehen ist, die Achse (33) aufzunehmen, enthält.

6. Vorrichtung nach Anspruch 5, dadurch gekennzeichnet, daß jedes der Lager (312, 323) durch eine Eintiefung in Form eines Halbzylinders (3121, 3231) hergestellt ist.

7. Vorrichtung nach Anspruch 6, dadurch gekennzeichnet, daß das Lager (312) der Sitzfläche mit einem Haken (3123) und einer Kerbe (3124) versehen ist und daß das Lager (323) des Hebels (32) mit einem Haken (3223) und einer Kerbe (3224) versehen ist, die von einem seiner Arme (322) getragen werden.

8. Vorrichtung nach irgendeinem der Ansprüche 5 bis 7, dadurch gekennzeichnet, daß die elastische Vorbelastung (35) durch eine Schraubenfeder mit Windungen (351), die dazu vorgesehen sind, in den Lagern (312, 323) aufzuruhen, und mit Schenkeln (352), die jeweils durch einen abgewinkelten Stiel (353) verlängert sind, der dazu vorgesehen ist, jeweils in einer Kerbe (3124, 3224) aufzuruhen, ausgeübt wird.

9. Vorrichtung nach irgendeinem der Ansprüche 5 bis 8, dadurch gekennzeichnet, daß einer (321) der Arme (321, 322) mit einem Zahn (3211) versehen ist, der dazu bestimmt ist, dem Nocken (10) zu folgen.

10. Vorrichtung nach irgendeinem der Ansprüche 1 bis 9, dadurch gekennzeichnet, daß der Nocken (10) eine an der Welle befestigte Schraubenfeder ist.

11. Vorrichtung nach irgendeinem der Ansprüche 3 bis 10, dadurch gekennzeichnet, daß der Verbinder (25) einen Sockel (251) enthält, der mit dem Gehäuse (10) fest verbunden ist, und daß die Nase (341) eine Außenkante des Sockels (251) ist.

12. Vorrichtung nach irgendeinem der Ansprüche 1 bis 11, dadurch gekennzeichnet, daß das Gehäuse (20) aus zwei Halbschalen (200) gebildet ist, die durch Verbindungsmittel (201) vereinigt sind, und daß eine dieser Halbschalen (200) den Verbinder (25) trägt.

13. Anwendung einer Vorrichtung nach irgendeinem der Ansprüche 1 bis 12, dadurch gekennzeichnet, daß die Welle und ihr Träger einen Teil einer Kraftfahrzeug-Lenksäule bilden.
